(19) **Europäisches Patentamt** / **European Patent Office** / **Office européen des brevets**

(11) **EP 4 779 512 A1**

(12) **EUROPEAN PATENT APPLICATION**

(43) Date of publication:
22.07.2026 Bulletin 2026/30

(21) Application number: 25223704.5

(22) Date of filing: 16.12.2025

(51) International Patent Classification (IPC):
***G06F 40/30*** (2020.01)   *G06F 40/289* (2020.01)
***G06F 40/216*** (2020.01)

(52) Cooperative Patent Classification (CPC):
**G06F 40/30;** G06F 40/216; G06F 40/289

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 20.01.2025 JP 2025008051

(71) Applicant: FUJITSU LIMITED
Kawasaki-shi, Kanagawa 211-8588 (JP)

(72) Inventors:
• **MITANI, Haruhi**
**Kawasaki-shi, Kanagawa, 211-8588 (JP)**

• **SAKAMAKI, Yoshiyuki**
**Kawasaki-shi, Kanagawa, 211-8588 (JP)**
• **TSUJI, Takuto**
**Kawasaki-shi, Kanagawa, 211-8588 (JP)**
• **HORII, Motoshi**
**Kawasaki-shi, Kanagawa, 211-8588 (JP)**
• **KOMAKI, Daijiro**
**Kawasaki-shi, Kanagawa, 211-8588 (JP)**

(74) Representative: Hoffmann Eitle
**Patent- und Rechtsanwälte PartmbB**
**Arabellastraße 30**
**81925 München (DE)**

(54) **INFORMATION PROCESSING APPARATUS FOR SIMILAR SENTENCES DETECTION, INFORMATION PROCESSING PROGRAM, AND INFORMATION PROCESSING METHOD**

(57) A vectorization unit (12) converts a first sentence and a second sentence into vector values using a sentence embedding model. A similarity calculation unit (13) calculates a first similarity of the first sentence to the second sentence based on the vector value of the first sentence and the vector value of the second sentence. A feature value extraction unit (14) extracts feature values of the first sentence and the second sentence. A corrected similarity calculation unit (15) calculates a second similarity by correcting the first similarity by weighting based on a difference between the feature values of the first sentence and the second sentence.

FIG.1

**Description**

FIELD

The embodiment discussed herein is related to an information processing apparatus, an information processing program, and an information processing method.

BACKGROUND

In recent years, similar sentence detection using a sentence embedding model has attracted attention. The sentence embedding model is a model that converts text into embedding vector representation. The embedding vector representation is also referred to as embedding representation. The sentence embedding model is also referred to as a model of Sentence Embeddings. The embedding model includes a word-level model that converts a word into embedding vector representation and a sentence-level model that converts a sentence into embedding vector representation. Also, there are also a plurality of sentence embedding models that can handle Japanese text.

In the similar sentence detection using the sentence embedding model, similarity calculation of embedding vector representation of text is performed to detect a similar sentence. In the similarity calculation, the similarity between sentences is calculated using a vector value obtained by vectorizing text. In the similarity calculation, for example, cosine similarity or the like is used. The closer the cosine similarity is to 1, the more similar the sentences are.

In the related art, as a technique of similar sentence detection using a sentence embedding model, there has been proposed a technique of converting a plurality of sentences to be detected and a search request into word vectors, converting each word vector into a sentence vector using a neural network, and calculating similarity between the sentence vectors. In addition, a technique has been proposed in which a word embedding vector is generated from a word string generated from an input question sentence by performing morphological analysis, a similarity between an assumed question sentence and the input question sentence is calculated, and a text of an answer sentence corresponding to the assumed question sentence having the similarity equal to or greater than a threshold value is output.

Patent Literature 1: Japanese Laid-open Patent Publication No. 2020-140435
Patent Literature 2: Japanese Laid-open Patent Publication No. 2020-190970

However, since the similar sentence detection using the sentence embedding model greatly depends on the similarity calculation between the vectors, the determination accuracy is limited. For example, in the similar sentence detection using the sentence embedding model, there is a problem that the difference in the amount of information of the sentence affects the similarity calculation, making erroneous determination likely when comparing a short sentence with a long sentence. Furthermore, in the similar sentence detection using the sentence embedding model, it is difficult to consider the numerical characteristic of numerical information in the sentence, and there is a problem in that erroneous determination is likely to occur when a numerical value is included in part of the sentence.

In addition, even in a technique of converting word vectors of a plurality of sentences to be detected and a search request into sentence vectors and calculating a similarity or a technique of calculating a similarity between an assumed question sentence and an input question sentence using a word embedding vector, a difference in an information amount or a numerical value is not considered. Therefore, the determination accuracy in the similar sentence detection is limited in any technique.

Accordingly, it is an object in one aspect of an embodiment of the present invention to provide an information processing apparatus, an information processing program, and an information processing method for improving determination accuracy of similar sentence detection.

SUMMARY

According to an aspect of an embodiment, an information processing apparatus includes a vectorization unit configured to convert a first sentence and a second sentence into vector values using a sentence embedding model, a similarity calculation unit configured to calculate a first similarity of the first sentence to the second sentence based on the vector value of the first sentence and the vector value of the second sentence, a feature value extraction unit configured to extract feature values of the first sentence and the second sentence, and a corrected similarity calculation unit configured to calculate a second similarity by correcting the first similarity by weighting based on a difference between the feature values of the first sentence and the second sentence.

BRIEF DESCRIPTION OF DRAWINGS

FIG. 1 is a block diagram of an information processing apparatus according to an embodiment;
FIG. 2 is a diagram illustrating cosine similarity;
FIG. 3 is a diagram illustrating an outline of each weighting in a numerical value correction function;
FIG. 4 is a diagram illustrating weighting on a matching numerical value;
FIG. 5 is a flowchart illustrating a similar sentence detection process;
FIG. 6 is a flowchart of a feature value extraction process;
FIG. 7 is a flowchart of a correction process using an amount of information difference correction function;
FIG. 8 is a flowchart of a correction process using the numerical value correction function;
FIG. 9 is a diagram illustrating an example of similarity calculation when correction is not performed;
FIG. 10 is a diagram illustrating an example of the feature value extraction process;
FIG. 11 is a diagram illustrating an example of the correction process using the amount of information difference correction function;
FIG. 12 is a diagram illustrating an example of the correction process using the numerical value correction function;
FIG. 13 is a diagram illustrating an example of a correction process in a case where weighting by a mismatching ratio is performed;
FIG. 14 is a diagram illustrating an example of an effect by the information processing apparatus according to the embodiment; and
FIG. 15 is a hardware configuration diagram of the information processing apparatus.

DESCRIPTION OF EMBODIMENT

Preferred embodiments of the present invention will be explained with reference to accompanying drawings. Note that the information processing apparatus, the information processing program, and the information processing method disclosed in the present application are not limited by the following embodiments.

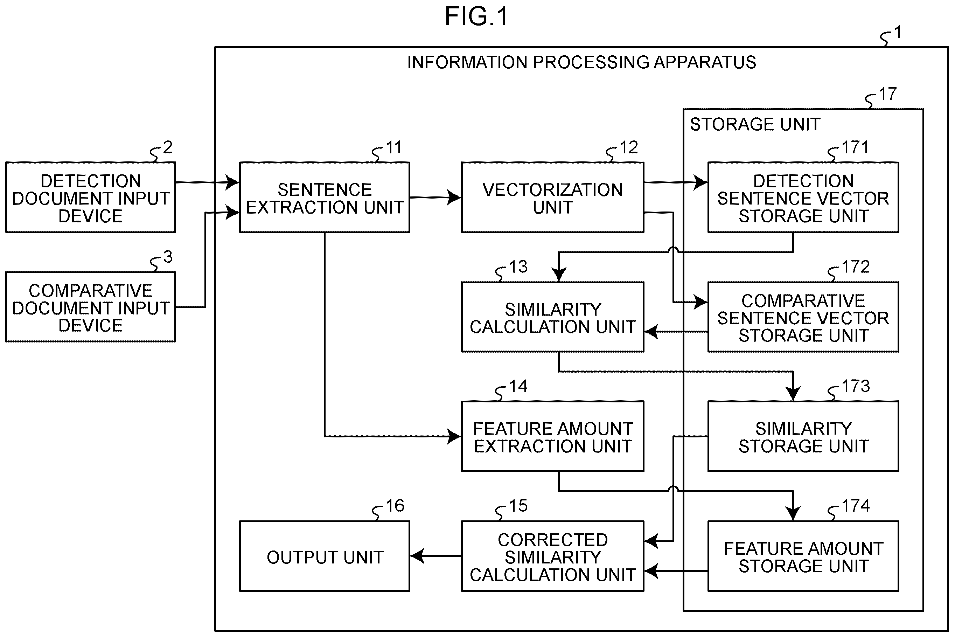

FIG. 1 is a block diagram of an information processing apparatus according to an embodiment. An information processing apparatus 1 is an apparatus that calculates similarity between a sentence to be detected and a sentence to be compared and detects a document similar to the sentence to be compared. As illustrated in FIG. 1, the information processing apparatus 1 includes a sentence extraction unit 11, a vectorization unit 12, a similarity calculation unit 13, a feature value extraction unit 14, a corrected similarity calculation unit 15, an output unit 16, and a storage unit 17.

The storage unit 17 includes a detection sentence vector storage unit 171, a comparative sentence vector storage unit 172, a similarity storage unit 173, and a feature value storage unit 174. The storage unit 17 may store other information.

The detection sentence vector storage unit 171 stores a vector value generated by the vectorization unit 12 vectorizing a detection sentence that is a sentence included in a detection document designated by a user. Hereinafter, the sentence included in the detection document is referred to as a "detection sentence". The similarity storage unit 173 stores the similarity calculated by the similarity calculation unit 13. The feature value storage unit 174 stores a feature value extracted by the feature value extraction unit 14. Vectorization, calculation of similarity, and extraction of a feature value are described in detail below.

The comparative sentence vector storage unit 172 stores a vector value of a comparative sentence that is a sentence included in a comparative document used to determine whether the content to be detected is included in the detection document designated by the user. Hereinafter, the sentence included in the comparative document is referred to as a "comparative sentence". The number of comparative documents may be one or plural. For example, when leakage of confidential content is prevented, the comparative sentence vector storage unit 172 stores the vector value of the comparative document by using a document in which the confidential content is described as the comparative document. By storing the vectorized vector value instead of the comparative sentence itself, the comparative sentence vector storage unit 172 can perform certain concealment even when the confidential content is included in the comparative document. The comparative sentence vector storage unit 172 may acquire and store the vector value of each comparative sentence included in the comparative document from an external device together with the comparative document or may acquire and store the vector value from the vectorization unit 12.

The sentence extraction unit 11 receives the detection document from a detection document input device 2. Here, the detection document input device 2 may be a terminal device of a user that creates, transmits and receives the detection document. In this case, the user inputs the detection document to be used using the detection document input device 2 to the information processing apparatus 1, so that the user can obtain the determination result of the input detection document from the information processing apparatus 1. In addition, a management server which is the detection document input device 2 may input a document to be transmitted to the outside to the information processing apparatus 1 as a detection document, obtain a determination result of the content of the input detection document, and determine the appropriateness/inappropriateness of transmission of the document to the outside.

The sentence extraction unit 11 performs a natural language process on the received detection document to extract the detection sentence. The sentence extraction unit 11 outputs the extracted detection sentences to the vectorization unit 12 and the feature value extraction unit 14.

Also, the sentence extraction unit 11 receives the comparative document from a comparative document input device 3. Here, the comparative document input device 3 may be a terminal device of a user that creates, transmits and receives the comparative document. The sentence extraction unit 11 performs a natural language process on the received comparative document to extract a sentence. The sentence extraction unit 11 may extract the comparative sentence at the execution timing of the similar sentence detection or in advance.

Here, the detection document corresponds to an example of a "first document", and the detection sentence corresponds to an example of a "first sentence". Also, the comparative document corresponds to an example of a "second document", and the comparative sentence corresponds to an example of a "second sentence". The sentence extraction unit 11 extracts a plurality of first sentences from the first document and extracts a plurality of the second sentences from the second document.

The vectorization unit 12 includes a sentence embedding model. The vectorization unit 12 receives an input of the detection sentence from the sentence extraction unit 11. Then, the vectorization unit 12 inputs the detection sentence to the sentence embedding model. Thereafter, the vectorization unit 12 acquires a vector value that is an embedding vector representation of the detection sentence output from the sentence embedding model. Hereinafter, inputting a sentence into a sentence embedding model to convert the sentence into an embedding vector representation is referred to as vectorization. Thereafter, the vectorization unit 12 stores the vector value of each of the detection sentences in the detection sentence vector storage unit 171.

In addition, the vectorization unit 12 stores a vector value obtained by vectorizing the comparative sentence acquired from the sentence extraction unit 11 in the comparative sentence vector storage unit 172. The vectorization unit 12 may vectorize the comparative sentence at the execution timing of the similar sentence detection or in advance.

In this manner, the vectorization unit 12 converts the detection sentence as the first sentence and the comparative sentence as the second sentence into vector values using the sentence embedding model.

The similarity calculation unit 13 acquires the vector values stored in the detection sentence vector storage unit 171 one by one. In addition, the similarity calculation unit 13 acquires the vector values of the respective comparative sentences stored in the comparative sentence vector storage unit 172. Hereinafter, processing on the vector value of the detection sentence and the vector value of each comparative sentence acquired by the similarity calculation unit 13 is described. The vector value of the detection sentence is referred to as a detection vector, and the vector value of each of the comparative sentences is referred to as a comparison vector.

Next, the similarity calculation unit 13 calculates the similarity between the detection sentence and the comparative sentence by using the detection vector and the comparison vector. The similarity calculation unit 13 stores the calculated similarity together with the information of the detection sentence and the comparative sentence used for the calculation in the similarity storage unit 173. For example, the similarity calculation unit 13 may calculate cosine similarity between sentences. The similarity calculation unit 13 calculates the similarity for each of the comparative sentences included in the comparative document for one detection document.

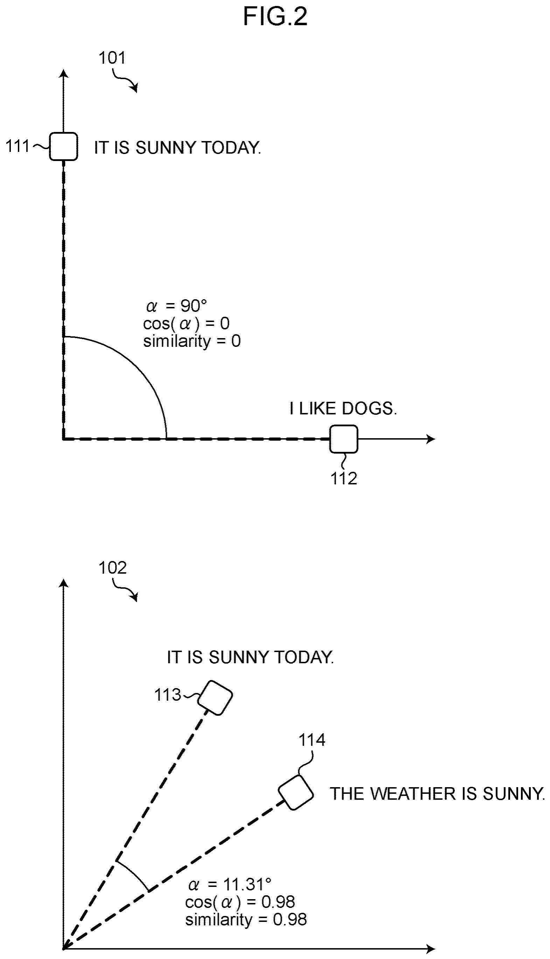

FIG. 2 is a diagram illustrating cosine similarity. The similarity indicates cosine similarity, and the similarity goes closer to 1 as the similarity increases. A graph 101 illustrates cosine similarity between a vector 111 of a sentence "It is sunny today." and a vector 112 of a sentence "I like dogs.". An angle $\alpha$ between the vector 111 and the vector 112 is 90°. In this case, cos (a) = 0 and similarity = 0. However, the detailed value of the angle $\alpha$ depends on the sentence embedding model to be used.

A graph 102 illustrates cosine similarity between a vector 113 of a sentence "It is sunny today." and a vector 114 of a sentence "The weather is sunny.". The angle $\alpha$ between the vector 113 and the vector 114 is 11.31°. In this case, cos ($\alpha$) = 0.98 and similarity = 0.98. Therefore, the sentence "The weather is sunny." is more similar to the sentence "It is sunny today." than the sentence "I like dogs.".

Here, the cosine similarity between the detection sentence and the comparative sentence corresponds to an example of the "first similarity". The similarity calculation unit 13 calculates the first similarity of the detection sentence as the first sentence to the comparative sentence as the second sentence based on the vector value of the detection sentence as the first sentence and the vector value of the comparative sentence as the second sentence. Furthermore, the similarity calculation unit 13 calculates the first similarity for each of the comparative sentences as the second sentences for each of the detection sentences as the first sentences.

Referring back to FIG. 1, the description is continued. The feature value extraction unit 14 receives an input of the detection sentence from the sentence extraction unit 11. Then, the feature value extraction unit 14 performs the morphological analysis of the sentence and the extraction of the unique expression of the detection sentence for each detection sentence.

Next, the feature value extraction unit 14 determines whether numerals exist in the detection sentence. Hereinafter, the numeral in the sentence is represented as "NUM".

When a NUM exists, the feature amount extraction unit 14 extracts and normalizes the NUM. For example, the feature amount extraction unit 14 normalizes the NUM by converting Chinese numerals into Arabic numerals, converting full-width characters into half-width characters, and removing commas from the NUM.

Next, the feature value extraction unit 14 determines whether a unique expression indicating a date exists in the extracted unique expression. Hereinafter, the unique expression indicating the date is referred to as "Date". Examples of Date include yyyy/mm/dd, yyyy/mm, mm/dd, yyyy-mm-dd, yyyy year mm month dd day, yyyy year mm month, mm month dd day, fiscal year yyyy, yyyy year, mm month, dd day, and "November 8,2021". Here, yyyy, mm, and dd each represent a number.

When Date exists in the extracted unique expression, the feature value extraction unit 14 extracts and normalizes the NUM corresponding to Date. The feature value extraction unit 14 normalizes the NUM extracted as Date to 8 digits of YYYYMMDD. The feature value extraction unit 14 collectively handles the NUM extracted as Date as one NUM.

For example, the feature value extraction unit 14 normalizes the unique expression extracted as Date to 8 digits of YYYYMMDD. At this time, the feature value extraction unit 14 assigns 0 to a portion having no information among the 8 digits of YYYYMMDD. In addition, in the case of the Japanese calendar, the feature value extraction unit 14 converts the Japanese calendar into the Western calendar, then converts the Western calendar into 8 digits, and then normalizes it by converting it into an 8 digit.

For example, when the extracted Date is 2024/11/29, the feature value extraction unit 14 normalizes the extracted Date to 20241129. Furthermore, when the extracted Date is February 1993, the feature value extraction unit 14 normalizes the extracted Date to 19930200. Furthermore, when the extracted Date is Showa 50, the feature value extraction unit 14 normalizes the extracted Date to 19750000.

The feature value extraction unit 14 performs the following processing using the normalized value of the NUM, and the normalized NUM is simply represented as the NUM in the following. Next, the feature value extraction unit 14 calculates the number of digits of each NUM. In the present embodiment, the feature value extraction unit 14 calculates the number of digits of the NUM as one digit, two digits, three digits, four digits, or five or more digits.

Next, the feature value extraction unit 14 calculates a hash value by hashing the NUM. For example, the feature value extraction unit 14 can perform hashing by using information that the numerical value of the NUM, the number of digits, and the unique expression are Date. When the NUM is Date, the feature value extraction unit 14 performs hashing by adding information indicating Date. For example, it is assumed that a hash function is hash, the feature value extraction unit 14 calculates a hash value by hash(30, D2) when the NUM=30. Here, D2 is a sign indicating two digits. When the NUM is Date, and the normalized expression is 20240800, the feature value extraction unit 14 calculates a hash value by hash (20240800, Date, D5). Here, D5 is a sign indicating five or more digits. At this time, D2 and D5 are safely managed by the user.

Thereafter, the feature value extraction unit 14 stores a total number of Date, a total number of the NUMs, the number of digits of the NUM, a total number of the NUMs having the same number of digits, and the hash value of NUM in the feature value storage unit 174. Here, the reason for using the hash value is to improve safety and avoid information leakage and the like, and if improvement of safety is not important, the feature value extraction unit 14 may store the value of the NUM in the feature value storage unit 174 as it is, without calculating the hash value.

Next, the feature value extraction unit 14 excludes a specific part of speech from the morpheme. For example, the feature value extraction unit 14 excludes, as a specific part of speech, a part of speech having no meaning, such as an interjection (INTJ), a punctuation mark (PUNCT), or a symbol (SYM). Next, the feature value extraction unit 14 calculates, as the number of words, the sum of morphemes after exclusion of a specific part of speech. Thereafter, the feature value extraction unit 14 stores the number of words of the sentence in the feature value storage unit 174.

Here, in the present embodiment, in order to strictly compare meanings of words, the feature value extraction unit 14 remove a specific part of speech having no meaning, but may remove another part of speech, or may avoid removing the part of speech.

The feature value extraction unit 14 also calculates a feature value including a total number of Date, a total number of the NUMs, the number of digits of the NUM, a total number of the NUMs having the same number of digits, the hash value of the NUM, and the number of words for the comparative sentence and stores the calculated feature value in the feature value storage unit 174. The feature value extraction unit 14 may execute the feature value of the comparative sentence at the time of detecting the similar sentence or may calculate the feature value in advance and store the feature value in the feature value storage unit 174.

In this manner, the feature value extraction unit 14 extracts the feature values of the first sentence and the second sentence. In addition, the number of words corresponds to an example of the "amount of information". The feature value extraction unit 14 extracts amount of informations of the first sentence and the second sentence as the feature values. In addition, the total number of Date, the total number of the NUMs, the number of digits of the NUM, the total number of the NUM having the same number of digits, and the hash value of the NUM in the sentence correspond to an example of "information of the numerical value". That is, the feature value extraction unit 14 extracts the information of numerical values included in each of the first sentence and the second sentence as the feature value.

The corrected similarity calculation unit 15 acquires the similarity between the sentences from the similarity storage unit 173. In addition, the corrected similarity calculation unit 15 acquires the feature values of the detection sentence and the comparative sentence from the feature value storage unit 174. Then, the corrected similarity calculation unit 15 calculates the corrected similarity by correcting the similarity between the sentences using the feature value in consideration of a difference in the amount of informations between the detection sentence and the comparative sentence and a contribution rate to the similarity by the numerical information. This corrected similarity corresponds to an example of "second similarity". The similarity correction by the corrected similarity calculation unit 15 is described below.

The corrected similarity calculation unit 15 performs amount of information difference correction that is correction using an amount of information difference correction function as one example of the correction. For example, for the specific similarity, the corrected similarity calculation unit 15 acquires the number of words of both sentences used for calculating the specific similarity from the feature value storage unit 174. Next, the corrected similarity calculation unit 15 calculates an absolute value of a difference in the numbers of words between both sentences. Next, the corrected similarity calculation unit 15 calculates a weight based on the absolute value of the difference in the number of words.

For example, the corrected similarity calculation unit 15 can calculate the weight using Formula (1) below as the amount of information difference correction function. The term amount in Formula (1) refers to a weight in the amount of information difference correction. The term sim refers to the similarity before correction. Further, the term diff refers to an absolute value of a difference between the numbers of words of both sentences. In addition, the term K refers to a weighting coefficient in the amount of information difference correction.

$$amount = (1 - sim) \cdot \frac{\log\left(1 + e^{(diff \cdot K)}\right)}{1 + \log\left(1 + e^{(diff \cdot K)}\right)} \quad \cdots (1)$$

Here, Formula (1) is the amount of information difference correction function created based on a softplus function expressed as softplus(x) = log(1 + ex), but the corrected similarity calculation unit 15 may calculate the weight using another activation function as the amount of information difference correction function.

Then, the corrected similarity calculation unit 15 applies the calculated weight to a specific similarity and calculates an amount of information difference corrected similarity, which is the similarity after the amount of information difference correction. For example, the corrected similarity calculation unit 15 calculates the amount of information difference corrected similarity by adding the calculated weight to the similarity before the amount of information difference correction.

Here, in the present embodiment, the corrected similarity calculation unit 15 uses the number of words as the amount of information of the sentence used in the amount of information difference correction but may use other information as long as the other information is a statistic indicating the amount of information of the sentence. For example, the corrected similarity calculation unit 15 can use a sentence length as the amount of information of the sentence.

Furthermore, in the present embodiment, the corrected similarity calculation unit 15 uses an absolute value of the difference in the amount of information. However, the present invention is not limited to this, and other types of information may be used as long as they represent a difference in the amount of information. For example, the corrected similarity calculation unit 15 can also use a distance such as an LP norm.

Here, the difference in the amount of information such as the number of words corresponds to an example of a "difference in the feature value". That is, the corrected similarity calculation unit 15 corrects the first similarity by weighting based on the difference in the feature values of the first sentence and the second sentence to calculate the second similarity. More specifically, the corrected similarity calculation unit 15 performs weighting so that the larger the difference in the amount of information, the higher the similarity.

Next, the corrected similarity calculation unit 15 executes numerical value correction that is correction using a numerical value correction function. For example, for a specific similarity, the corrected similarity calculation unit 15 acquires, from the feature value storage unit 174, a total number of Date, a total number of the NUMs, the number of digits of the NUM, the total number of the NUM having the same number of digits, and the hash value of the NUM of both sentences used when the specific similarity is calculated.

Next, the corrected similarity calculation unit 15 compares the hash values of the NUMs included in both sentences and calculates the number of NUMs including the NUM matching the comparative sentence and the number of the NUMs not including the matching NUM among the NUMs included in the detection sentence. Hereinafter, the NUM including the NUM matching the comparative sentence is referred to as "matching NUM", and NUM not including NUM matching the comparative sentence is referred to as "mismatching NUM".

When the mismatching NUM exists, and the similarity is equal to or greater than the threshold value, the corrected similarity calculation unit 15 determines to perform the weighting by the mismatching ratio. Then, the corrected similarity calculation unit 15 calculates a weight based on the mismatching ratio. Specifically, the corrected similarity calculation unit 15 calculates the weight so that the larger the mismatching ratio, the lower the similarity.

For example, the corrected similarity calculation unit 15 can calculate the weight based on a mismatching ratio, by using Formula (2). The term miss_p in Formula (2) is the weight based on the mismatching ratio. Further, the term missmatch_ratio refers to a mismatching ratio. In addition, MW is a weighting coefficient in weighting by a mismatching ratio.

$$miss\_p = \frac{1}{1 + e^{(-MW \cdot missmatch\_ratio)}} \quad \cdots (2)$$

Here, Formula (2) is a function created based on the sigmoid function expressed as sigmoid (x) = 1/(1 + e$^{-x}$), but the corrected similarity calculation unit 15 may calculate a weight based on a mismatching ratio by using another activation function.

However, setting the similarity being equal to or greater than the threshold value as the condition for correction is an example, and the corrected similarity calculation unit 15 may perform correction without providing a condition. In addition, the threshold value used for determining whether to perform the weighting by the mismatching ratio may be the same as or different from the threshold value used for determining whether the detection sentence is finally similar to the comparative sentence.

Here, the mismatching ratio corresponds to an example of a "difference in information of the numerical values". That is, the corrected similarity calculation unit 15 calculates the weight based on the difference in information of the numerical values. Also, the mismatching NUM corresponds to an example of the "mismatching numerical value". That is, the corrected similarity calculation unit 15 determines a mismatching numerical value that does not include a numerical value matching the second sentence among the numerical values included in the first sentence and performs weighting so that the larger the number of mismatching numerical values, the lower the similarity.

Furthermore, the corrected similarity calculation unit 15 determines whether a matching NUM exists. When the matching NUM does not exist, the corrected similarity calculation unit 15 sets a result obtained by performing correction by weighting the mismatching ratio as the numerical value corrected similarity.

When the matching NUM exists, the corrected similarity calculation unit 15 calculates a weight by the number of the matching NUMs for each number of digits. Specifically, the corrected similarity calculation unit 15 calculates the weight so that the higher the number of matching NUMs, the higher the similarity, and the larger the number of digits of the matching NUM, the higher the similarity. Then, the corrected similarity calculation unit 15 applies the calculated weight to the specific similarity and performs correction.

For example, the corrected similarity calculation unit 15 can calculate the weight by the number of the matching NUMs for each number of digits using Formula (3) below. The term match_b in Formula (3) refers to a weight based on the number of the matching NUMs for each number of digits. Furthermore, DIW is a weighting coefficient used in weighting based on the number of the matching NUMs for each number of digits.

$$match\_b = \sum_{i=1}^{5} \text{the number of } i \text{ digits} \times \text{DIW of } i \text{ digits} \quad \cdots (3)$$

Here, the number of the matching NUMs for each number of digits corresponds to an example of the "difference in information of the numerical values". Also, the matching NUM corresponds to an example of the "matching numerical value". That is, the corrected similarity calculation unit 15 determines a matching numerical value that includes a numerical value matching the second sentence among the numerical values included in the first sentence and performs weighting so that the larger the number of digits matching numerical values, the higher the similarity.

Next, the corrected similarity calculation unit 15 determines whether Date exists in the matching NUM. When Date exists, the corrected similarity calculation unit 15 calculates a weight based on the total number of Date. Specifically, when the numerical value expression of the matching NUM is Date, the corrected similarity calculation unit 15 calculates the weight so that the similarity becomes low.

For example, the corrected similarity calculation unit 15 can calculate a weight based on the total number of Date using Formula (4) below. The term date_p in Formula (4) refers to a weight based on the total number of Date. In addition, the term DAW refers to a weighting coefficient in weighting by the total number of Date.

$$date\_p = Date \times \text{DAW} \quad \cdots (4)$$

Here, the total number of Date in the matching NUM corresponds to an example of the "difference in information of the numerical values". In addition, Date corresponds to an example of a "matching numerical value indicating a date". That is, the corrected similarity calculation unit 15 weights the matching numerical value indicating the date to lower the similarity as compared with the matching numerical value not indicating the date.

Here, in the present embodiment, the corrected similarity calculation unit 15 performs weighting using the NUM in which unique expression is Date but may perform the weighting using a unique expression that is considered to affect the similarity. For example, the corrected similarity calculation unit 15 can also perform weighting using a unique expressions related to time such as time expression (Time). Also, the corrected similarity calculation unit 15 can also perform weighting by using unique expressions related to periods such as a period of days (Period_Day), a period of weeks (Period_Week), a period of months (Period_Month), and a period of years (Period _Year). In addition, the corrected similarity calculation unit 15 can also perform weighting using unique expressions such as money expression (Money), age (Age), dimension expression (Measurement), and number (Countx). Note that, although an example in which the corrected similarity calculation unit 15 uses the unique expression that frequently appears in a business document is provided here, the corrected similarity calculation unit 15 can use any unique expression including a numerical value for weighting in addition to these.

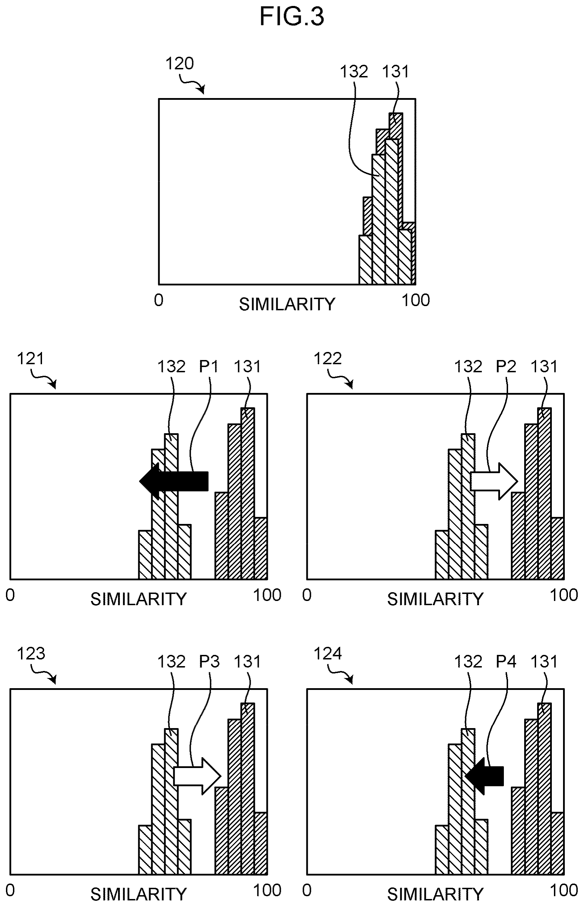

FIG. 3 is a diagram illustrating an outline of each weighting in a numerical value correction function. Here, meanings of the correction of similarity in the numerical value correction function are described with reference to FIG. 3. Data 131 in graphs 120 to 124 indicates semantically similar data of the detection sentence and the comparative sentence, and data 132 indicates semantically dissimilar data of the sentence to be detected and the comparative sentence. In the graphs 120 to 124, the horizontal axis represents similarity, and the vertical axis represents the number of data items.

When the weighting by the numerical value correction function is not performed, the numerical value is treated as a simple string of numbers, and the similarity is calculated to be high even in the case of different numerical values. The graph 120 is a diagram illustrating similarity when numerical values exist in both the data 131 and 132, and weighting by the numerical value correction function is not performed, and illustrates overlap between the data 131 and the data 132. When the weighting by the numerical value correction function is not performed, the similarity of the data 132 that is dissimilar data is calculated to be high by the simple existence of a numerical value.

However, in practice, if the numerical values are different, there is a high possibility that the meaning represented by the sentence is different. Therefore, the corrected similarity calculation unit 15 decreases the similarity as the mismatching ratio increases. For example, the corrected similarity calculation unit 15 lowers the similarity between the data 131 and 132 as indicated by an arrow P1 in the graph 121 according to the mismatching ratio between the data 131 and 132.

Conversely, if the numerical values match, there is a high possibility that the meanings represented by the sentences match. Therefore, the corrected similarity calculation unit 15 increases the similarity as the number of the matching NUMs increases. For example, when the matching NUM exists in the data 131 and 132, the corrected similarity calculation unit 15 increases the similarity between the corresponding data 131 and 132 as indicated by an arrow P2 in the graph 122.

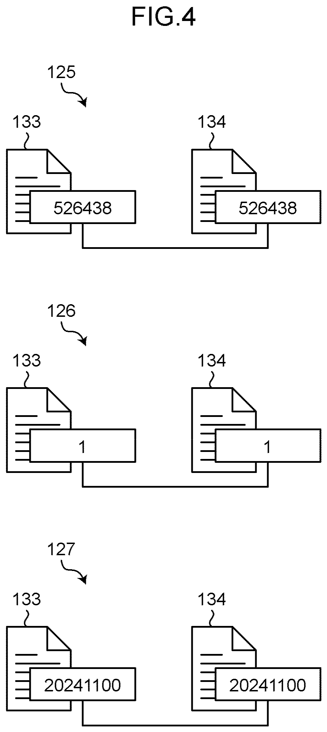

Furthermore, it is considered that the larger the number of digits of the matching NUM, the more difficult matching is. FIG. 4 is a diagram illustrating weighting on a matching numerical value. For example, a state 125 in which the number of six digits that is the same as the number of six digits included in the sentence 133 is included in the sentence 134 probably occurs less than a state 126 in which the number of one digit that is the same as the number of one digit included in the sentence 133 is included in the sentence 134. That is, in the state 125, the sentence 133 is more likely to be similar to the sentence 134 than in the state 126. Therefore, the corrected similarity calculation unit 15 increases the similarity as the number of digits of the matching NUMs increases. For example, when the number of digits of matching NUM of the data 131 and 132 is large, the corrected similarity calculation unit 15 increases the similarity between the data 131 and 132 as indicated by an arrow P3 in the graph 123 of FIG. 3.

The corrected similarity calculation unit 15 according to the present embodiment performs different weighting with a one-digit numerical value, a numerical value of two digits, a numerical value of three digits, a numerical value of four digits, and a numerical value of five or more digits. Here, the reason why the numerical values of five or more digits are put together is that the numerical values of up to four digits frequently appear in the sentence, but the appearance frequency decreases in the numerical values of five or more digits. However, the corrected similarity calculation unit 15 can also perform different weighting for five digits, six digits, seven digits, and eight digits, and more.

In addition, numerical values corresponding to the date expression are more likely to match than other numerical values of five or more digits because there are restrictions on usable numbers. For example, a state 127 in which the same date as the date included in the sentence 133 illustrated in FIG. 4 is included in the sentence 134 probably occurs more than the state 125 in which numerical values of five or more digits other than the date match. That is, in the state 127, the sentence 133 is less likely to be similar to the sentence 134 than in the state 125. Therefore, when the numerical value expression of the matching NUM is Date, the corrected similarity calculation unit 15 sets the similarity to be lower than the other numerical values of five or more digits. For example, when the NUM having the unique expression of Date exists in the matching NUM between the data 131 and 132, the corrected similarity calculation unit 15 decreases the similarity between the data 131 and 132 as indicated by an arrow P4 in the graph 124 of FIG. 3.

Referring back to FIG. 1, the description is continued. In the numerical value correction, the corrected similarity calculation unit 15 performs correction by applying to the similarity before the numerical value correction each of the following weights: a weight based on the calculated mismatching ratio, a weight based on the number of digits of the matching NUM and the number of NUMs for each number of digits, and a weight based on the total number of Date, thereby calculating the numerical value corrected similarity.

The corrected similarity calculation unit 15 calculates the corrected similarity by applying the amount of information difference correction and the numerical value correction described above to the similarity of the detection sentence to the comparative sentence. That is, when the numerical value correction is not performed, the corrected similarity calculation unit 15 sets the amount of information difference corrected similarity as the corrected similarity. When performing the numerical value correction, the corrected similarity calculation unit 15 sets the numerical value corrected similarity calculated based on the amount of information difference corrected similarity as the corrected similarity. Thereafter, the corrected similarity calculation unit 15 outputs the corrected similarity of the detection sentence to the comparative sentence to the output unit 16.

For example, a case is described in which the correction by the amount of information difference correction function and the correction by the numerical value correction function including all of the weight by the mismatching ratio, the weight based on the number of digits of the matching NUM and the number of NUMs for each number of digits, and the weight based on the total number of Date are performed. In this case, the corrected similarity calculation unit 15 can calculate the corrected similarity using Formula (5) below.

$$(sim + amount) \times (1 - miss\_p) + match\_b - date\_p \quad \cdots (5)$$

The corrected similarity calculation unit 15 calculates the corrected similarity for each of the comparative sentences for each detection sentence. That is, the corrected similarity calculation unit 15 corrects each first similarity for each first sentence and calculates the second similarity for each second sentence.

The output unit 16 receives an input of the corrected similarity from the corrected similarity calculation unit 15. Next, the output unit 16 compares the corrected similarity of the detection sentence to the comparative sentence with a predetermined threshold value. Then, the output unit 16 detects the detection sentence having the corrected similarity exceeding the threshold value as a similar sentence. Thereafter, the output unit 16 outputs information of the detection sentence detected as the similar sentence. The information of the detection sentence detected as the output similar sentence is transmitted to the terminal device or the like of the user.

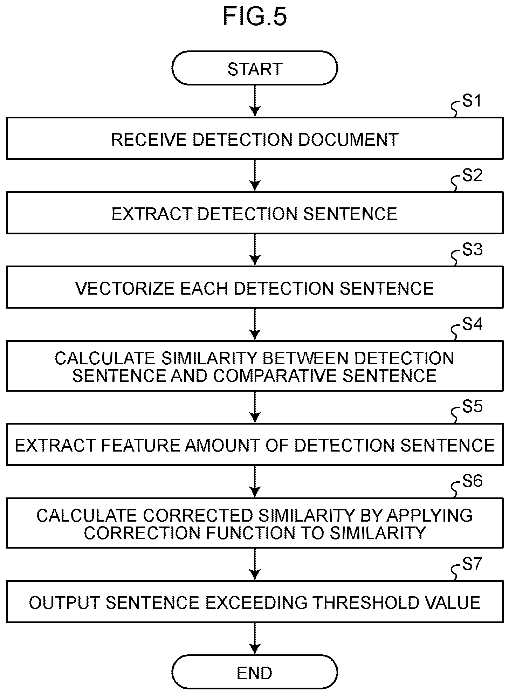

FIG. 5 is a flowchart illustrating a similar sentence detection process. Next, an overall flow of the similar sentence detection process by the information processing apparatus 1 according to the embodiment is described with reference to FIG. 5.

The sentence extraction unit 11 receives the detection document from the detection document input device 2 (step S1).

Next, the sentence extraction unit 11 performs the natural language process on the received detection document to extract the detection sentence (step S2). The sentence extraction unit 11 outputs each extracted detection sentence to the vectorization unit 12 and the feature value extraction unit 14.

The vectorization unit 12 receives an input of each detection sentence from the sentence extraction unit 11. Then, the vectorization unit 12 vectorizes each detection sentence using the sentence embedding model (step S3). Thereafter, the vectorization unit 12 stores each detection vector obtained by vectorizing each detection sentence in the detection sentence vector storage unit 171.

The similarity calculation unit 13 selects the comparison vector stored in the comparative sentence vector storage unit 172 for each detection vector stored in the detection sentence vector storage unit 171. Then, the similarity calculation unit 13 calculates the similarity between the detection sentence and the comparative sentence by using the selected comparison vector (step S4). The similarity calculation unit 13 stores the similarity of each detection sentence to each comparative sentence in the similarity storage unit 173.

The feature value extraction unit 14 extracts the feature value of the detection sentence and stores the feature value in the feature value storage unit 174 (step S5). The feature value extraction unit 14 also extracts the feature value for the comparative sentence, but this process may be executed in advance to store the feature value in the feature value storage unit 174

The corrected similarity calculation unit 15 calculates corrected similarity by applying a correction function to the similarity (step S6).

The output unit 16 outputs the sentence having the corrected similarity exceeding the threshold value (step S7).

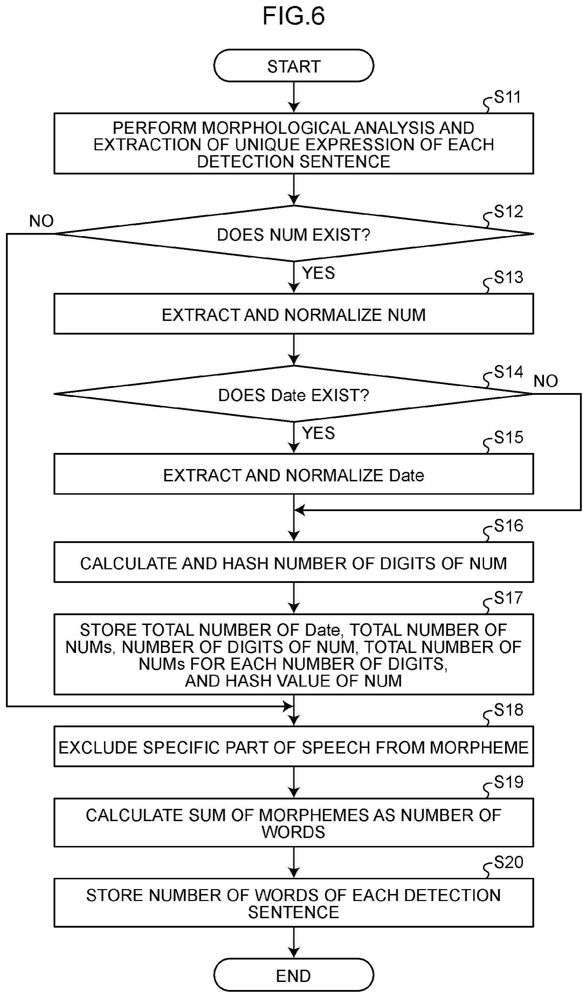

FIG. 6 is a flowchart of a feature value extraction process. Next, a flow of the feature value extraction process by the information processing apparatus 1 according to the embodiment is described with reference to FIG. 6.

The feature value extraction unit 14 receives an input of the detection sentence from the sentence extraction unit 11. The feature value extraction unit 14 performs the morphological analysis and the extraction of the unique expression of the sentence for each detection sentence (step S11).

Next, the feature value extraction unit 14 determines whether the NUM exists in the detection sentence (step S12). When the NUM does not exist (step S12: negative), the feature value extraction unit 14 proceeds to step S18.

Meanwhile, when the NUM exists (step S12: positive), the feature value extraction unit 14 extracts and normalizes the NUM included in the detection sentence (step S13).

Next, the feature value extraction unit 14 determines whether the unique expression Date exists in the extracted NUM (step S14). When the unique expression Date does not exist in the extracted NUM (step S14: negative), the feature value extraction unit 14 proceeds to step S16.

Meanwhile, when the unique expression Date exists in the extracted NUM (step S14: positive), the feature value extraction unit 14 extracts the NUM corresponding to Date and collectively normalizes the extracted NUM (step S15).

Next, the feature value extraction unit 14 calculates the number of digits of each NUM. In addition, the feature value extraction unit 14 calculates a hash value by hashing the value of the NUM, the sign of the number of digits, and the presence or absence of Date (step S16).

Next, the feature value extraction unit 14 stores a total number of Date, a total number of the NUMs, the number of digits of the NUM, a total number of the NUMs having the same number of digits, and the hash value of NUM in the feature value storage unit 174 (step S17).

Next, the feature value extraction unit 14 excludes a specific part of speech from the morpheme (step S18).

Next, the feature value extraction unit 14 calculates, as the number of words, the sum of morphemes excluding the specific part of speech (step S19).

Next, the feature value extraction unit 14 stores the number of words of each detection sentence in the feature value storage unit 174 (step S20).

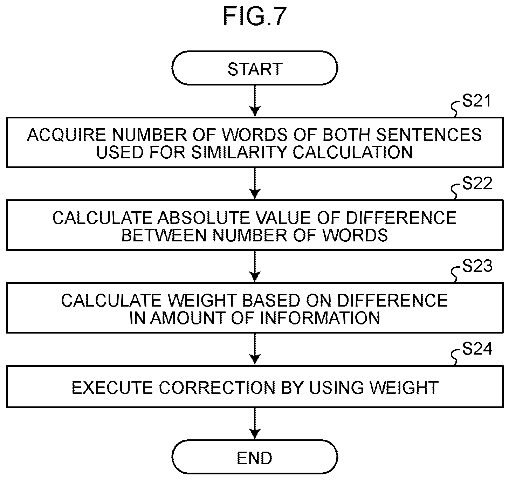

FIG. 7 is a flowchart of the correction process using the amount of information difference correction function. Next, a flow of the correction process using the amount of information difference correction function by the information processing apparatus 1 according to the embodiment is described with reference to FIG. 7.

For the specific similarity, the corrected similarity calculation unit 15 acquires the number of words of both sentences used for calculating the similarity from the feature value storage unit 174 (step S21).

Next, the corrected similarity calculation unit 15 calculates an absolute value of a difference in the numbers of words between both sentences (step S22).

Next, the corrected similarity calculation unit 15 calculates the weight based on an absolute value of the difference in the number of words with respect to the specific similarity (step S23).

Then, the corrected similarity calculation unit 15 executes correction by assigning the calculated weight to the specific similarity to calculate the amount of information difference corrected similarity (step S24).

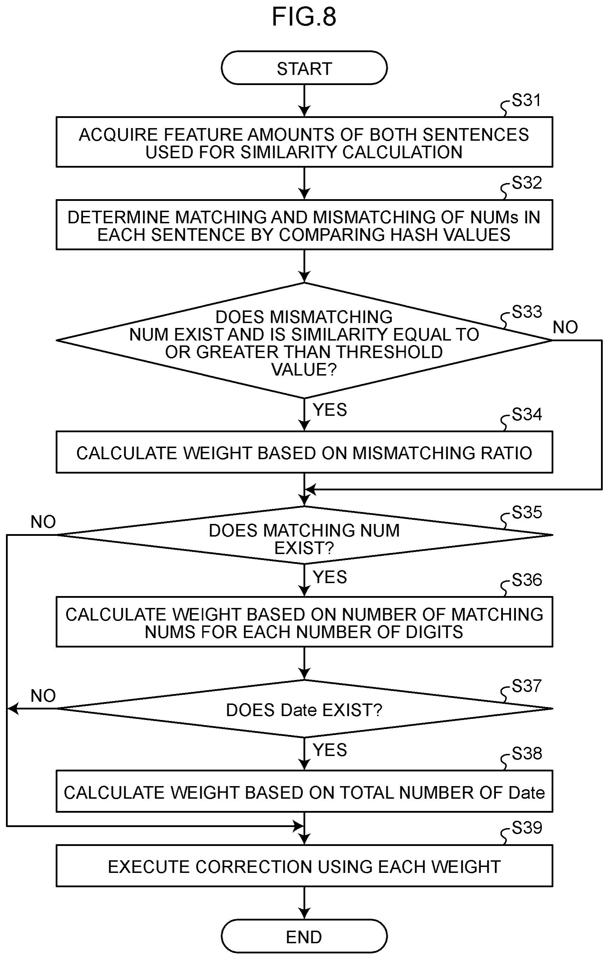

FIG. 8 is a flowchart of the correction process using the numerical value correction function. Next, a flow of the correction process using the numerical value correction function by the information processing apparatus 1 according to the embodiment is described with reference to FIG. 8.

For a specific similarity, the corrected similarity calculation unit 15 acquires, from the feature value storage unit 174, feature values for both the detection sentence and the comparative sentence, such as a total number of Date, a total number of the NUMs, the number of digits of the NUM, the total number of the NUMs having the same number of digits, and the hash value of the NUMs of both sentences used when the specific similarity is calculated (step S31).

Next, the corrected similarity calculation unit 15 compares the hash values of the NUMs included in both sentences and determines whether the NUMs of the each sentence match or mismatch (step S32). The corrected similarity calculation unit 15 calculates the number of the matching NUMs and the number of the mismatching NUMs among the NUMs of the detection sentence.

Then, the corrected similarity calculation unit 15 determines whether the mismatching NUM exists for the sentence having the specific similarity and whether the similarity is equal to or greater than the threshold value (step S33). When the mismatching NUM does not exist, or the similarity is less than the threshold value (step S33: negative), the corrected similarity calculation unit 15 proceeds to step S35.

Meanwhile, if the mismatching NUM exists, and the similarity is equal to or greater than the threshold value (step S33: positive), the corrected similarity calculation unit 15 calculates a weight based on the mismatching ratio (step S34).

Next, the corrected similarity calculation unit 15 determines whether the matching NUM exists (step S35). When the matching NUM does not exist (step S35: negative), the corrected similarity calculation unit 15 proceeds to step S39.

In contrast, when the matching NUM exists (step S35: positive), the corrected similarity calculation unit 15 calculates a weight by the number of the matching NUMs for each number of digits (step S36).

Next, the corrected similarity calculation unit 15 determines whether Date exists in the matching NUM (step S37). When Date does not exist (step S37: negative), the corrected similarity calculation unit 15 proceeds to step S39.

In contrast, when Date exists (step S37: positive), the corrected similarity calculation unit 15 calculates a weight based on the total number of Date (step S38).

Thereafter, the corrected similarity calculation unit 15 applies each calculated weight to the specific similarity and performs correction to compute the numerical value corrected similarity (step S39).

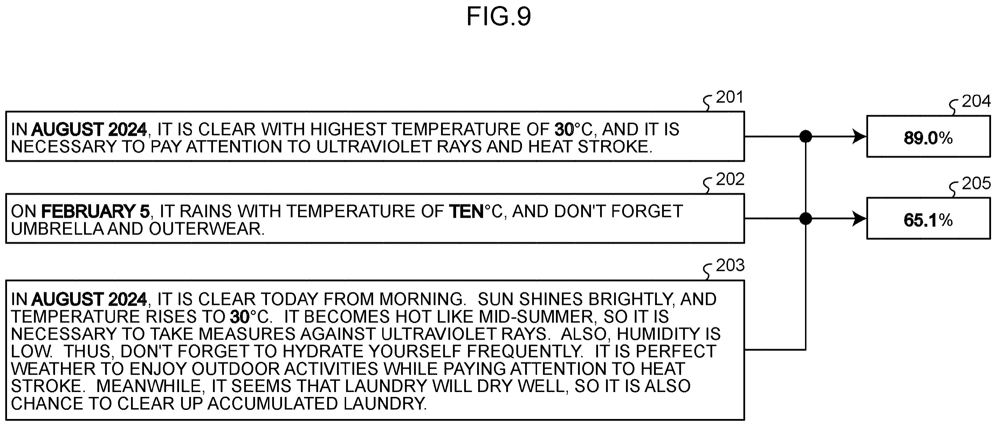

Next, a specific example of the similar sentence detection is described. FIG. 9 is a diagram illustrating an example of similarity calculation when correction is not performed. Here, the similarity between sentences 201 and 202 of the detection document and a sentence 203 of the comparative document is described. The sentence 201 is a sentence obtained by summarizing the sentence 203. Furthermore, the threshold value used for similarity determination is set to 95%, and it is determined that sentences having a similarity exceeding 95% are similar.

The similarity calculation unit 13 calculates a similarity 204 between the sentence 201 and the sentence 203 as 89.0% using the detection vector of the sentence 201 and the comparison vector of the sentence 203. Also, the similarity calculation unit 13 calculates a similarity 205 between the sentence 202 and the sentence 203 as 65.1% using the detection vector of the sentence 202 and the comparison vector of the sentence 203. In this case, since neither of the similarities 204 and 205 exceeds 95%, it is determined that both of the sentences 201 and 202 are dissimilar to the sentence 203. The information processing apparatus 1 according to the present embodiment performs the following correction, calculates the corrected similarity between the sentence 201 and the sentence 203 and the corrected similarity between the sentence 202 and the sentence 203, and determines a similar sentence. Here, a case where the feature value of the sentence 203 of the comparative document is calculated at the same timing as the calculation of the feature values of the sentences 201 and 202 is described.

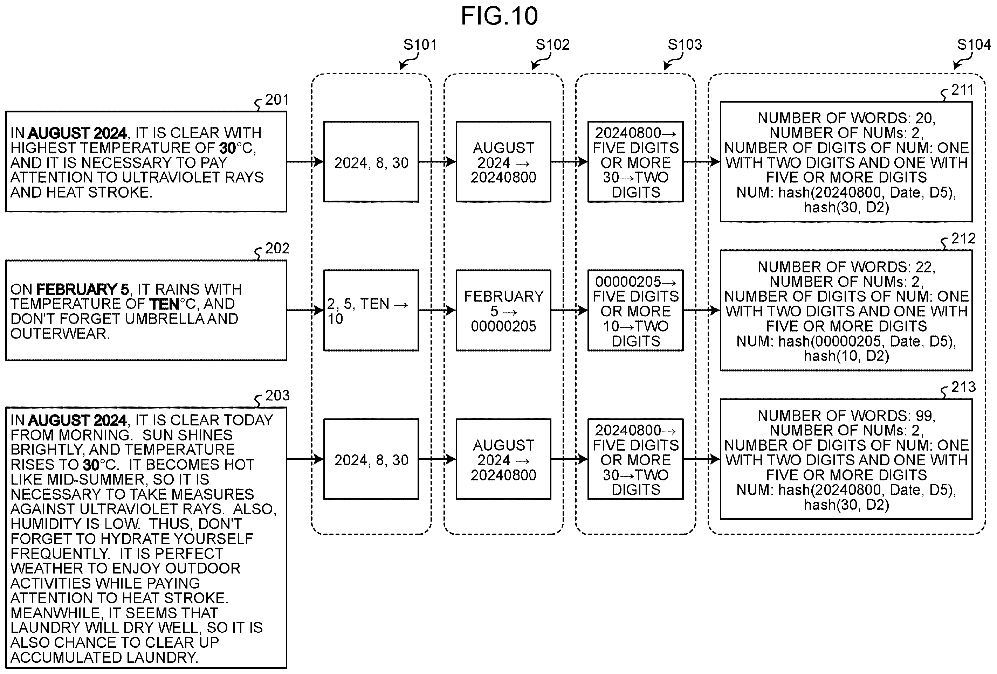

FIG. 10 is a diagram illustrating an example of the feature value extraction process. The feature value extraction unit 14 extracts the NUM from the sentences 201 to 203 and normalizes the extracted NUM (step S101). For example, the feature value extraction unit 14 extracts 2024, 8, and 30 as the NUM from the sentence 201. The feature value extraction unit 14 may avoid normalizing these numbers. Also, the feature value extraction unit 14 extracts 2, 5, and ten as the NUM from the sentence 202. Then, the feature value extraction unit 14 normalizes the Chinese numeral "ten" and converts it into the Arabic numeral "10". Also, the feature value extraction unit 14 extracts 2024, 8, and 30, as the NUM from the sentence 201. The feature value extraction unit 14 may avoid normalizing these numbers.

Next, the feature value extraction unit 14 extracts and normalizes Date as the unique expression (step S102). For example, the feature value extraction unit 14 extracts August 2024 as Date for the sentence 201. Then, the feature value extraction unit 14 normalizes August 2024 to 20240800. Also, the feature value extraction unit 14 extracts February 5 as Date for the sentence 202. Then, the feature value extraction unit 14 normalizes February 5 to 00000205. Also, the feature value extraction unit 14 extracts August 2024 as Date for the sentence 203. Then, the feature value extraction unit 14 normalizes August 2024 to 20240800.

Next, the feature value extraction unit 14 calculates the number of digits classified into any one of one digit, two digits, three digits, four digits, and five digits or more for each of the normalized NUM including the numerical value obtained by normalizing Date. For example, among the normalized values of the NUM included in the sentence 201, the feature value extraction unit 14 determines that 20240800 has 5 digits or more and 30 has two digits. Also, among the normalized values of the NUM included in the sentence 202, the feature value extraction unit 14 determines that 00000205 has 5 digits or more and 10 has two digits. Also, among the normalized values of the NUM included in the sentence 203, the feature value extraction unit 14 determines that 20240800 has 5 digits or more and 30 has two digits. Furthermore, the feature value extraction unit 14 performs hashing by using the normalized value of the NUM, the sign of the number of digits, and the information of the presence or absence of the unique expression Date (step S103).

Next, the feature value extraction unit 14 removes interjections, punctuation marks, and symbols from each morpheme of the sentences 201 to 203 as predetermined parts of speech and calculates the total number of morphemes in each sentence as the number of words of the sentences 201 to 203, respectively. Thereafter, a feature value 211 of the sentence 201, a feature value 212 of the sentence 202, and a feature value 213 of the sentence 203 are stored in the feature value storage unit 174 (step S104).

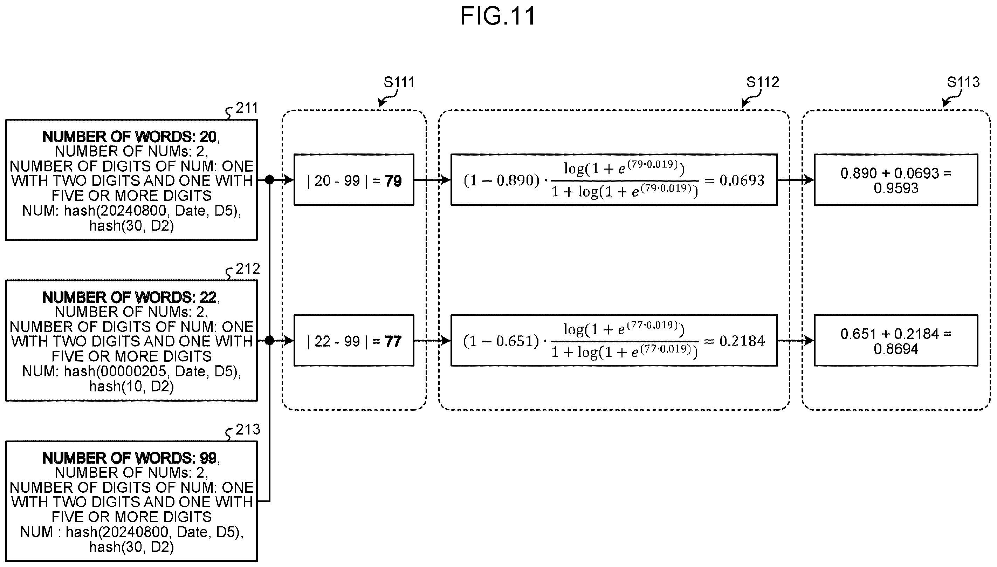

FIG. 11 is a diagram illustrating an example of a correction process using the amount of information difference correction function. The corrected similarity calculation unit 15 calculates the absolute value of the difference in the number of words from the sentence 203 for each of the sentences 201 and 202 using the feature values 211 to 213 (step S111). For example, since the number of words of the sentence 201 is 20 as indicated by the feature value 211, and the number of words of the sentence 203 is 99 as indicated by the feature value 213, the corrected similarity calculation unit 15 calculates the absolute value of the difference in the number of words between the sentence 201 and the sentence 203 as 79. Also, since the number of words of the sentence 202 is 22 as indicated by the feature value 212, and the number of words of the sentence 203 is 99 as indicated by the feature value 213, the corrected similarity calculation unit 15 calculates the absolute value of the difference in the number of words between the sentence 202 and the sentence 203 as 77.

Next, the corrected similarity calculation unit 15 calculates a weight in the amount of information difference correction using Formula (1) (step S112). In this case, the corrected similarity calculation unit 15 calculates the weight in the amount of information difference correction for the sentence 201 as 0.0693. Also, the corrected similarity calculation unit 15 calculates a weight in the correction using the amount of information difference correction function for the sentence 202 as 0.2184.

Next, the corrected similarity calculation unit 15 calculates the amount of information difference corrected similarity by summing the similarity and the weight before the amount of information difference correction is applied (step S113). In this case, the corrected similarity calculation unit 15 calculates the amount of information difference corrected similarity for the sentence 201 as 0.9593. Also, the corrected similarity calculation unit 15 calculates the amount of information difference corrected similarity for the sentence 202 as 0.8694.

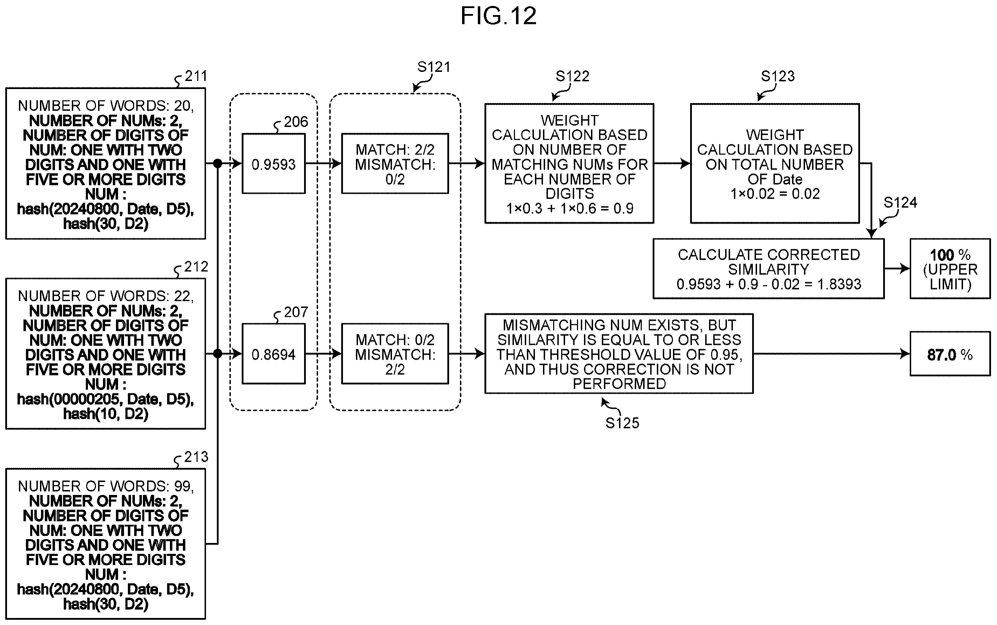

FIG. 12 is a diagram illustrating an example of the correction process using a numerical value correction function. Here, a case where an amount of information difference corrected similarity 206 for the sentence 201 and an amount of information difference corrected similarity 207 for the sentence 202 obtained in FIG. 11 are corrected is described.

Using the hash value included in the feature values 211 to 213, the corrected similarity calculation unit 15 calculates the number of the matching NUMs and the mismatching NUMs with respect to the NUM included in the sentences 203 for the NUMs included in the sentences 201 and 202 (step S121). In this case, the corrected similarity calculation unit 15 determines that, among two NUMs of the sentence 201, the number of matching NUMs is 2, and the number of mismatching NUMs is 0. Also, among two NUMs of the sentence 202, the corrected similarity calculation unit 15 determines that the number of matching NUMs is 0, and the number of mismatching NUMs is 2.

Since the mismatching NUM does not exist in the sentence 201, the corrected similarity calculation unit 15 does not calculate the weight based on the mismatching ratio but calculates the weight based on the number of digits of the matching NUM and the number of matching NUMs for each number of digits using Formula (3). Here, assuming that DIW = $(i + 1) \times 0.1$ (i is number of digits), the corrected similarity calculation unit 15 calculates the weight based on the number of matching NUMs for each number of digits as $1 \times 0.3 + 1 \times 0.6 = 0.9$ (step S122).

Further, for the sentence 201, the corrected similarity calculation unit 15 calculates a weight based on the total number of Date using Formula (4). Here, assuming that DAW = 0.02, the corrected similarity calculation unit 15 calculates the weight based on the total number of Date as $1 \times 0.02 = 0.02$ (step S123).

Thereafter, the corrected similarity calculation unit 15 calculates the corrected similarity using Formula (5). In this case, the corrected similarity calculation unit 15 calculates the corrected similarity as $0.9593 + 0.9 - 0.02 = 1.8393$ (step S124). Since the corrected similarity exceeds the upper limit of 100%, the corrected similarity calculation unit 15 calculates the corrected similarity of the sentence 201 to the sentence 203 as 100%.

In addition, in the sentence 202, although mismatching NUM exists, the similarity obtained by converting a numerical value obtained by rounding off the fourth decimal place into a percentage is equal to or less than 95% that is the threshold value, and thus the corrected similarity calculation unit 15 does not perform correction (step S125). Here, the corrected similarity calculation unit 15 uses 95% that is the same as the threshold value used to detect the similar sentence, as the threshold value for determination of performing weighting based on the mismatching ratio. Then, the corrected similarity calculation unit 15 converts a numerical value obtained by rounding off the fourth decimal place into a percentage and calculates the corrected similarity as 87.0%.

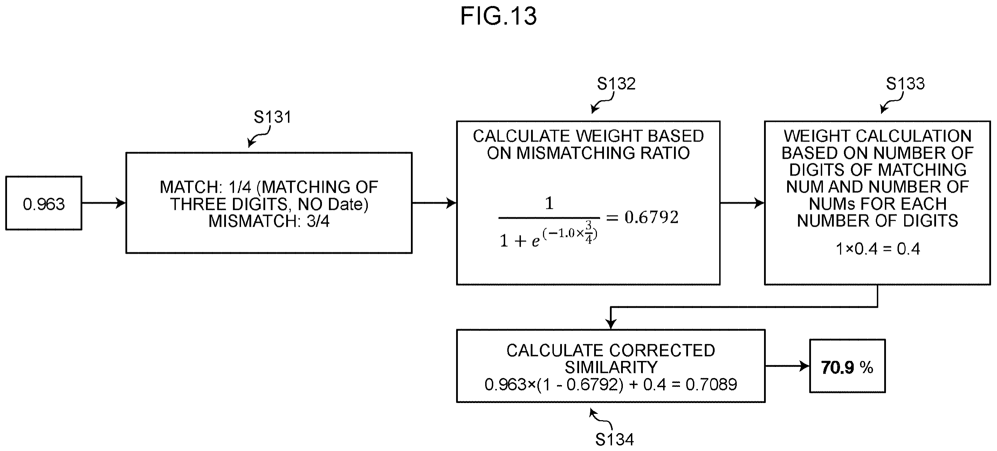

FIG. 13 is a diagram illustrating an example of the correction process in a case where weighting based on a mismatching ratio is performed. In the above description, since the weighting based on the mismatching ratio is not performed, an example of the correction process in a case where the weighting based on the mismatching ratio is performed is described below with reference to FIG. 13. Here, as an example, with respect to the dissimilar sentence, a case where the similarity before the correction using the correction function is applied is 0.963 is described.

The corrected similarity calculation unit 15 calculates the number of matching NUMs and mismatching NUMs in the NUMs included in the sentence by using the hash value of the detection sentence used when the target similarity is calculated. Here, the corrected similarity calculation unit 15 determines that, among four NUMs of the sentence, the number of matching NUMs is 1, and the number of mismatching NUMs is 3 (step S131). Note that it is assumed that the number of digits of the matching NUM is three, and the unique expression is not Date.

The mismatching NUMs exist, the similarity obtained by converting a numerical value obtained by rounding off the fourth decimal place into a percentage is 95% or more, and thus the corrected similarity calculation unit 15 calculates a weight based on the mismatching ratio by using Formula (2). Here, assuming that MW = 1.0, the corrected similarity calculation unit 15 calculates a weight based on the mismatching ratio as 0.6792 (step S132).

Further, the corrected similarity calculation unit 15 calculates the weight based on the number of digits of the matching NUMs and the number of matching NUMs for each number of digits by using Formula (3). Here, assuming that DIW = $(i + 1) \times 0.1$ (i is number of digits), the corrected similarity calculation unit 15 calculates the weight based on the number of matching NUMs for each number of digits as DIW = $1 \times 0.4 = 0.4$ (step S133).

Thereafter, the corrected similarity calculation unit 15 calculates the corrected similarity using Formula (5). In this case, the corrected similarity calculation unit 15 calculates the corrected similarity as $0.963 \times (1 - 0.6792) + 0.4 = 0.7089$ (step S134). Then, the corrected similarity calculation unit 15 converts a numerical value obtained by rounding off the fourth decimal place into a percentage and calculates the corrected similarity as 70.9%.

In this case, the target detection sentence is erroneously determined to be similar in the similarity before the correction using the correction function, but the information processing apparatus 1 can determine that the target detection sentence is dissimilar by performing the correction using the correction function.

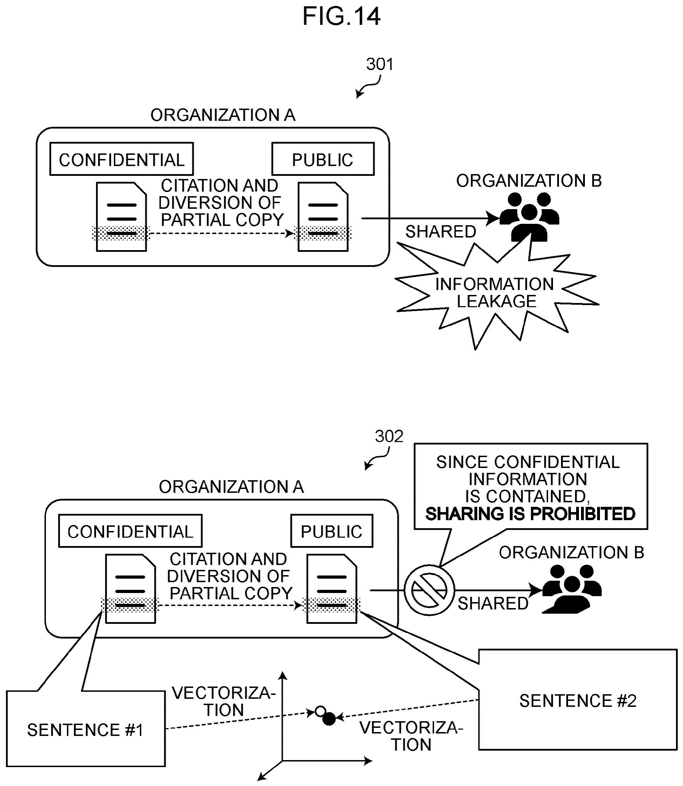

FIG. 14 is a diagram illustrating an example of an effect of the information processing apparatus according to the embodiment. Here, a case in which information of organization A is shared with organization B. Conventionally, as shown in state 301, when the organization A creates a public document by diverting part of a confidential document, the public document is treated as a different document from the confidential one. As a result, there is a high risk that the public document is easily shared with organization B, leading to information leakage.

In contrast, as illustrated in state 302, when the information processing apparatus 1 according to the present embodiment creates a public document including a sentence #2 created by diverting a sentence #1 of the confidential document or the like, the information processing apparatus 1 vectorizes and compares the sentence #1 and the sentence #2 to determine the similarity. Furthermore, the information processing apparatus 1 can calculate similarity with higher accuracy by performing correction using the amount of information difference and the numerical information. As a result, the accuracy of determining whether confidential information is included in the sentence #2 can be improved When sentence #2 is determined to include confidential information, sharing with the organization B can be prohibited, thereby reducing the risk of information leakage.

As described above, the information processing apparatus 1 according to the present embodiment calculates the corrected similarity by correcting the similarity between sentences calculated using the sentence embedding model in consideration of the amount of information difference and the numerical information and detects a similar sentence.

In this way, by applying correction by the amount of information difference, the information processing apparatus 1 can suppress the occurrence of erroneous determination by comparison between a short sentence and a long sentence and can reduce the occurrence of false negative. Furthermore, the information processing apparatus 1 can accurately determine the similarity of sentences including different numerical values in consideration of the numerical characteristics of the numerical information in the sentences by performing correction using the numerical information and can reduce the occurrence of false positive. In addition, the information processing apparatus 1 improves applicability to various data formats and domains and can perform more general-purpose similar sentence detection. Therefore, the determination accuracy of the similar sentence detection can be improved. For example, the information processing apparatus 1 can represent sentences included in large-scale documents as vectors to convert them into knowledge representations, enabling high-speed automatic identification of semantic similarity and automatic prevention of information leakage.

Furthermore, the information processing apparatus 1 can be implemented by applying the functions of the amount of information difference correction and the numerical information correction to the similarity calculated by the existing sentence embedding model, and the introduction cost can be suppressed. Furthermore, the information processing apparatus 1 can be applied to any sentence embedding model by adding parameter adjustment.

Hardware Configuration

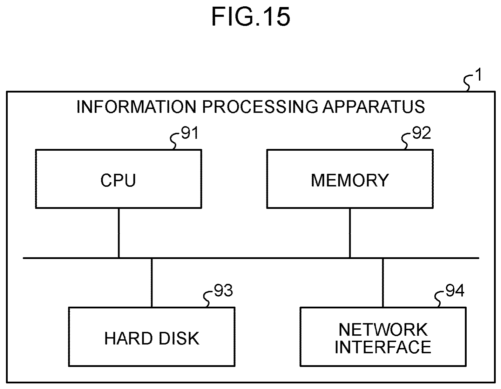

FIG. 15 is a hardware configuration diagram of the information processing apparatus. Next, an example of a hardware configuration for realizing each function of the information processing apparatus 1 is described with reference to FIG. 15.

As illustrated in FIG. 15, the information processing apparatus 1 includes, for example, a central processing unit (CPU) 91, a memory 92, a hard disk 93, and a network interface 94. The CPU 91 is connected to the memory 92, the hard disk 93, and the network interface 94 via a bus.

The network interface 94 is an interface for communication between the information processing apparatus 1 and an external device. The network interface 94 relays, for example, communication of the detection document input device 2 and the comparative document input device 3 with the CPU 91.

The hard disk 93 is an auxiliary storage device. The hard disk 93 implements the functions of the storage unit 17 illustrated in FIG. 1. In addition, the hard disk 93 stores various programs including programs for implementing the functions of the sentence extraction unit 11, the vectorization unit 12, the similarity calculation unit 13, the feature value extraction unit 14, the corrected similarity calculation unit 15, and the output unit 16 illustrated in FIG. 1.

The memory 92 is a main storage device. For example, a dynamic random access memory (DRAM) can be used as the memory 92.

The CPU 91 reads various programs from the hard disk 93, loads the programs into the memory 92, and executes the programs. As a result, the CPU 91 implements the functions of the sentence extraction unit 11, the vectorization unit 12, the similarity calculation unit 13, the feature value extraction unit 14, the corrected similarity calculation unit 15, and the output unit 16 illustrated in FIG. 1.

In one aspect, the present invention can improve determination accuracy of similar sentence detection.

**Claims**

1.  An information processing apparatus (1) comprising:

    a vectorization unit (12) configured to converts a first sentence and a second sentence into vector values using a sentence embedding model;
    a similarity calculation unit (13) configured to calculate a first similarity of the first sentence to the second sentence based on the vector value of the first sentence and the vector value of the second sentence;
    a feature value extraction unit (14) configured to extract feature values of the first sentence and the second sentence; and
    a corrected similarity calculation unit (15) configured to calculate a second similarity by correcting the first similarity by weighting based on a difference between the feature values of the first sentence and the second sentence.

2.  The information processing apparatus (1) according to claim 1,

    wherein the feature value extraction unit (14) extracts amount of informations of the first sentence and the second sentence as the feature value, and
    the corrected similarity calculation unit (15) performs weighting so that the larger a difference between the amount of informations, the higher the similarity.

3.  The information processing apparatus (1) according to claim 1,

    wherein the feature value extraction unit (14) extracts information of a numerical value included in each of the first sentence and the second sentence as the feature value, and
    the corrected similarity calculation unit (15) calculates a weight based on a difference between the information of the numerical value.

4.  The information processing apparatus (1) according to claim **3,** wherein the corrected similarity calculation unit (15) determines a mismatching numerical value that does not include a numerical value matching the second sentence among the numerical values included in the first sentence and performs weighting so that the larger the number of mismatching numerical values, the lower the similarity.

5.  The information processing apparatus (1) according to claim **3,** wherein the corrected similarity calculation unit (15) determines a matching numerical value that includes a numerical value matching the second sentence among the numerical values included in the first sentence and performs weighting so that the higher the number of digits of the matching numerical value, the higher the similarity.

6.  The information processing apparatus (1) according to claim 5, wherein the corrected similarity calculation unit (15) weights the matching numerical value representing a date to lower similarity as compared with the matching numerical value not representing a date.

7.  The information processing apparatus (1) according to any one of claims 1 to 6, further including:

    a sentence extraction unit (11) configured to extract a plurality of the first sentences from a first document and extracts a plurality of the second sentences from a second document;
    wherein the similarity calculation unit (13) calculates the first similarity to each of the second sentences for each first sentence, and
    the corrected similarity calculation unit (15) corrects the first similarity for each first sentence and calculate the second similarity for each corresponding second sentence.

8.  An information processing program that causes a computer to execute a process comprising:

    converting a first sentence and a second sentence into vector values using a sentence embedding model;
    calculating a first similarity of the first sentence to the second sentence based on the vector value of the first sentence and the vector value of the second sentence;
    extracting feature values of the first sentence and the second sentence; and
    calculating a second similarity by correcting the first similarity by weighting based on a difference between the feature values of the first sentence and the second sentence.

9. An information processing method performed by an information processing apparatus (1), the method comprising:

converting a first sentence and a second sentence into vector values using a sentence embedding model;
calculating a first similarity of the first sentence to the second sentence based on the vector value of the first sentence and the vector value of the second sentence;
extracting feature values of the first sentence and the second sentence; and
calculating a second similarity by correcting the first similarity by weighting based on a difference between the feature values of the first sentence and the second sentence.

## FIG.1

INFORMATION PROCESSING APPARATUS 〜1

DETECTION DOCUMENT INPUT DEVICE 〜2

COMPARATIVE DOCUMENT INPUT DEVICE 〜3

SENTENCE EXTRACTION UNIT 〜11

VECTORIZATION UNIT 〜12

STORAGE UNIT 〜17

DETECTION SENTENCE VECTOR STORAGE UNIT 〜171

SIMILARITY CALCULATION UNIT 〜13

COMPARATIVE SENTENCE VECTOR STORAGE UNIT 〜172

FEATURE AMOUNT EXTRACTION UNIT 〜14

SIMILARITY STORAGE UNIT 〜173

OUTPUT UNIT 〜16

CORRECTED SIMILARITY CALCULATION UNIT 〜15

FEATURE AMOUNT STORAGE UNIT 〜174

EP 4 779 512 A1

# FIG.2

101

111～ IT IS SUNNY TODAY.

$\alpha$ = 90°
cos($\alpha$) = 0
similarity = 0

I LIKE DOGS.

112

102

IT IS SUNNY TODAY.

113～

114

THE WEATHER IS SUNNY.

$\alpha$ = 11.31°
cos($\alpha$) = 0.98
similarity = 0.98

# FIG.3

# FIG.4

# FIG.5

START

$\quad$ S1
RECEIVE DETECTION DOCUMENT

$\quad$ S2
EXTRACT DETECTION SENTENCE

$\quad$ S3
VECTORIZE EACH DETECTION SENTENCE

$\quad$ S4
CALCULATE SIMILARITY BETWEEN DETECTION SENTENCE AND COMPARATIVE SENTENCE

$\quad$ S5
EXTRACT FEATURE AMOUNT OF DETECTION SENTENCE

$\quad$ S6
CALCULATE CORRECTED SIMILARITY BY APPLYING CORRECTION FUNCTION TO SIMILARITY

$\quad$ S7
OUTPUT SENTENCE EXCEEDING THRESHOLD VALUE

END

# FIG.6

```
                    START
                      │
                      ▼
┌─────────────────────────────────────────┐  S11
│   PERFORM MORPHOLOGICAL ANALYSIS AND     │
│  EXTRACTION OF UNIQUE EXPRESSION OF EACH │
│            DETECTION SENTENCE            │
└─────────────────────────────────────────┘
                      │
                      ▼
         ◇──────────────────────◇  S12
   NO ───│    DOES NUM EXIST?    │
         ◇──────────────────────◇
                      │ YES
                      ▼
         ┌─────────────────────────┐  S13
         │ EXTRACT AND NORMALIZE NUM│
         └─────────────────────────┘
                      │
                      ▼
         ◇──────────────────────◇  S14
         │   DOES Date EXIST?    │── NO
         ◇──────────────────────◇
                      │ YES
                      ▼
         ┌─────────────────────────┐  S15
         │ EXTRACT AND NORMALIZE Date│
         └─────────────────────────┘
                      │
                      ▼
┌─────────────────────────────────────────┐  S16
│  CALCULATE AND HASH NUMBER OF DIGITS OF  │
│                  NUM                     │
└─────────────────────────────────────────┘
                      │
                      ▼
┌─────────────────────────────────────────┐  S17
│  STORE TOTAL NUMBER OF Date, TOTAL       │
│  NUMBER OF NUMs, NUMBER OF DIGITS OF NUM,│
│  TOTAL NUMBER OF NUMs FOR EACH NUMBER OF │
│  DIGITS, AND HASH VALUE OF NUM           │
└─────────────────────────────────────────┘
                      │
                      ▼
┌─────────────────────────────────────────┐  S18
│ EXCLUDE SPECIFIC PART OF SPEECH FROM     │
│              MORPHEME                    │
└─────────────────────────────────────────┘
                      │
                      ▼
┌─────────────────────────────────────────┐  S19
│  CALCULATE SUM OF MORPHEMES AS NUMBER OF │
│                  WORDS                   │
└─────────────────────────────────────────┘
                      │
                      ▼
┌─────────────────────────────────────────┐  S20
│ STORE NUMBER OF WORDS OF EACH DETECTION  │
│              SENTENCE                    │
└─────────────────────────────────────────┘
                      │
                      ▼
                     END
```

# FIG.7

START

S21

ACQUIRE NUMBER OF WORDS OF BOTH SENTENCES
USED FOR SIMILARITY CALCULATION

S22

CALCULATE ABSOLUTE VALUE OF DIFFERENCE
BETWEEN NUMBER OF WORDS

S23

CALCULATE WEIGHT BASED ON DIFFERENCE
IN AMOUNT OF INFORMATION

S24

EXECUTE CORRECTION BY USING WEIGHT

END

# FIG.8

START

S31

ACQUIRE FEATURE AMOUNTS OF BOTH SENTENCES
USED FOR SIMILARITY CALCULATION

S32

DETERMINE MATCHING AND MISMATCHING OF NUMs IN
EACH SENTENCE BY COMPARING HASH VALUES

S33

DOES MISMATCHING
NUM EXIST AND IS SIMILARITY EQUAL TO
OR GREATER THAN THRESHOLD
VALUE?

NO

YES

S34

CALCULATE WEIGHT BASED ON MISMATCHING RATIO

S35

NO — DOES MATCHING NUM
EXIST?

YES

S36

CALCULATE WEIGHT BASED ON NUMBER OF MATCHING
NUMS FOR EACH NUMBER OF DIGITS

S37

NO — DOES Date EXIST?

YES

S38

CALCULATE WEIGHT BASED ON TOTAL NUMBER OF Date

S39

EXECUTE CORRECTION USING EACH WEIGHT

END

## FIG.9

IN **AUGUST 2024**, IT IS CLEAR WITH HIGHEST TEMPERATURE OF **30**°C, AND IT IS NECESSARY TO PAY ATTENTION TO ULTRAVIOLET RAYS AND HEAT STROKE. ⌒201

ON **FEBRUARY 5**, IT RAINS WITH TEMPERATURE OF **TEN**°C, AND DON'T FORGET UMBRELLA AND OUTERWEAR. ⌒202

IN **AUGUST 2024**, IT IS CLEAR TODAY FROM MORNING.  SUN SHINES BRIGHTLY, AND TEMPERATURE RISES TO **30**°C.  IT BECOMES HOT LIKE MID-SUMMER, SO IT IS NECESSARY TO TAKE MEASURES AGAINST ULTRAVIOLET RAYS.  ALSO, HUMIDITY IS LOW.  THUS, DON'T FORGET TO HYDRATE YOURSELF FREQUENTLY.  IT IS PERFECT WEATHER TO ENJOY OUTDOOR ACTIVITIES WHILE PAYING ATTENTION TO HEAT STROKE.  MEANWHILE, IT SEEMS THAT LAUNDRY WILL DRY WELL, SO IT IS ALSO CHANCE TO CLEAR UP ACCUMULATED LAUNDRY. ⌒203

**89.0**% ⌒204

**65.1**% ⌒205

# FIG.10

EP 4 779 512 A1

**201**

IN **AUGUST 2024**, IT IS CLEAR WITH HIGHEST TEMPERATURE OF **30**°C, AND IT IS NECESSARY TO PAY ATTENTION TO ULTRAVIOLET RAYS AND HEAT STROKE.

**S101**

2024, 8, 30

**S102**

AUGUST 2024 → 20240800

**S103**

20240800→ FIVE DIGITS OR MORE 30→TWO DIGITS

**S104**

**211**

NUMBER OF WORDS: 20, NUMBER OF NUMs: 2, NUMBER OF DIGITS OF NUM: ONE WITH TWO DIGITS AND ONE WITH FIVE OR MORE DIGITS NUM: hash(20240800, Date, D5), hash(30, D2)

**202**

ON **FEBRUARY 5**, IT RAINS WITH TEMPERATURE OF **TEN**°C, AND DON'T FORGET UMBRELLA AND OUTERWEAR.

2, 5, TEN → 10

FEBRUARY 5 → 00000205

00000205→ FIVE DIGITS OR MORE 10→TWO DIGITS

**212**

NUMBER OF WORDS: 22, NUMBER OF NUMs: 2, NUMBER OF DIGITS OF NUM: ONE WITH TWO DIGITS AND ONE WITH FIVE OR MORE DIGITS NUM: hash(00000205, Date, D5), hash(10, D2)

**203**

IN **AUGUST 2024**, IT IS CLEAR TODAY FROM MORNING. SUN SHINES BRIGHTLY, AND TEMPERATURE RISES TO **30**°C. IT BECOMES HOT LIKE MID-SUMMER, SO IT IS NECESSARY TO TAKE MEASURES AGAINST ULTRAVIOLET RAYS. ALSO, HUMIDITY IS LOW. THUS, DON'T FORGET TO HYDRATE YOURSELF FREQUENTLY. IT IS PERFECT WEATHER TO ENJOY OUTDOOR ACTIVITIES WHILE PAYING ATTENTION TO HEAT STROKE. MEANWHILE, IT SEEMS THAT LAUNDRY WILL DRY WELL, SO IT IS ALSO CHANCE TO CLEAR UP ACCUMULATED LAUNDRY.

2024, 8, 30

AUGUST 2024 → 20240800

20240800→ FIVE DIGITS OR MORE 30→TWO DIGITS

**213**

NUMBER OF WORDS: 99, NUMBER OF NUMs: 2, NUMBER OF DIGITS OF NUM: ONE WITH TWO DIGITS AND ONE WITH FIVE OR MORE DIGITS NUM: hash(20240800, Date, D5), hash(30, D2)

# FIG.11

EP 4 779 512 A1

# FIG.12

NUMBER OF WORDS: 20, **NUMBER OF NUMs: 2, NUMBER OF DIGITS OF NUM: ONE WITH TWO DIGITS AND ONE WITH FIVE OR MORE DIGITS NUM :** hash(20240800, Date, D5), hash(30, D2) — 211

0.9593 — 206

MATCH: 2/2 MISMATCH: 0/2 — S121

WEIGHT CALCULATION BASED ON NUMBER OF MATCHING NUMs FOR EACH NUMBER OF DIGITS 1×0.3 + 1×0.6 = 0.9 — S122

WEIGHT CALCULATION BASED ON TOTAL NUMBER OF Date 1×0.02 = 0.02 — S123

CALCULATE CORRECTED SIMILARITY 0.9593 + 0.9 - 0.02 = 1.8393 — S124

**100** % (UPPER LIMIT)

NUMBER OF WORDS: 22, **NUMBER OF NUMs: 2, NUMBER OF DIGITS OF NUM: ONE WITH TWO DIGITS AND ONE WITH FIVE OR MORE DIGITS NUM :** hash(00000205, Date, D5), hash(10, D2) — 212

0.8694 — 207

MATCH: 0/2 MISMATCH: 2/2

MISMATCHING NUM EXISTS, BUT SIMILARITY IS EQUAL TO OR LESS THAN THRESHOLD VALUE OF 0.95, AND THUS CORRECTION IS NOT PERFORMED — S125

**87.0** %

NUMBER OF WORDS: 99, **NUMBER OF NUMs: 2, NUMBER OF DIGITS OF NUM: ONE WITH TWO DIGITS AND ONE WITH FIVE OR MORE DIGITS NUM :** hash(20240800, Date, D5), hash(30, D2) — 213

FIG.13

```
0.963  →  S131
          MATCH: 1/4 (MATCHING OF
          THREE DIGITS, NO Date)
          MISMATCH: 3/4

→  S132
   CALCULATE WEIGHT BASED
   ON MISMATCHING RATIO
```

$$\frac{1}{1 + e^{(-1.0 \times \frac{3}{4})}} = 0.6792$$

S133

WEIGHT CALCULATION
BASED ON NUMBER OF
DIGITS OF MATCHING
NUM AND NUMBER OF
NUMs FOR EACH
NUMBER OF DIGITS

$1 \times 0.4 = 0.4$

CALCULATE CORRECTED
SIMILARITY
$0.963 \times (1 - 0.6792) + 0.4 = 0.7089$

**70.9 %**

S134

EP 4 779 512 A1

# FIG.14

301

ORGANIZATION A

CONFIDENTIAL

PUBLIC

CITATION AND
DIVERSION OF
PARTIAL COPY

ORGANIZATION B

SHARED

INFORMATION
LEAKAGE

302

ORGANIZATION A

CONFIDENTIAL

PUBLIC

CITATION AND
DIVERSION OF
PARTIAL COPY

SINCE CONFIDENTIAL
INFORMATION
IS CONTAINED,
**SHARING IS PROHIBITED**

ORGANIZATION B

SHARED

SENTENCE #1

VECTORIZA-
TION

VECTORIZA-
TION

SENTENCE #2

# FIG.15

INFORMATION PROCESSING APPARATUS

91
CPU

92
MEMORY

93
HARD DISK

94
NETWORK INTERFACE

Europäisches
Patentamt
European
Patent Office
Office européen
des brevets

# EUROPEAN SEARCH REPORT

Application Number

EP 25 22 3704

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 779 978 A (SHANGHAI YIZHE INFORMATION TECH CO LTD) 10 December 2021 (2021-12-10) * abstract * * paragraphs [0001] - [0024] * ----- | 1-9 | INV. G06F40/30 ADD. G06F40/289 G06F40/216 |
| A | LIU PENGYUAN ET AL: "Sentence Similarity Computation by Integrating Shallow and Deep Information", 2018 INTERNATIONAL CONFERENCE ON ASIAN LANGUAGE PROCESSING (IALP) IEEE, 15 November 2018 (2018-11-15), pages 308-311, XP033510290, DOI: 10.1109/IALP.2018.8629105 [retrieved on 2019-01-28] * the whole document * ----- | 1-9 | |
| A | ZHU TIAN TIAN ET AL: "ECNUCS: Measuring Short Text Semantic Equivalence Using Multiple Similarity Measurements", SECOND JOINT CONFERENCE ON LEXICAL AND COMPUTATIONAL SEMANTICS (*SEM), vol. 1, 14 June 2013 (2013-06-14), pages 124-131, XP093400625, Retrieved from the Internet: URL:https://aclanthology.org/S13-1017.pdf> * abstract * * Sections 2, 2.6 * ----- | 3-6 | |
| A | Anonymous: "Embedding Models: The Impact Of Textual Length On Embedding Similarity Part 2", , 6 June 2023 (2023-06-06), XP093400695, Retrieved from the Internet: URL:https://blog.gdeltproject.org/embeddin g-models-the-impact-of-textual-length-on-e mbedding-similarity-part-2/ * page 1 - page 2 * ----- | 1-9 | TECHNICAL FIELDS SEARCHED (IPC) G06F |

The present search report has been drawn up for all claims

| Place of search | Date of completion of the search | Examiner |
|---|---|---|
| Berlin | 26 May 2026 | Chéron, Laurent |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 22 3704

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2026

| Patent document cited in search report | Publication date | Patent family member(s) | Publication date |
|---|---|---|---|
| CN 113779978 A | 10-12-2021 | NONE | |

EPO FORM P0459

**EP 4 779 512 A1**

**Patent documents cited in the description**

- JP 2020140435 A

- JP 2020190970 A